# EUROPÄISCHE PATENTSCHRIFT

(11) **EP 0 494 393 B1**
(45) Veröffentlichungstag und Bekanntmachung des Hinweises auf die Patenterteilung: **21.07.1993**
(21) Anmeldenummer: 91121244.7
(22) Anmeldetag: 11.12.1991
(51) Int. Cl.: B60G 13/00, F16F 9/54

(54) **Unabhängige Radaufhängung**
Independent wheel suspension
Suspension de roue indépendante

(30) Priorität: 08.01.1991 DE 4100296
(43) Veröffentlichungstag der Anmeldung: 15.07.1992
(73) Patentinhaber: MERCEDES-BENZ AG, 70327 Stuttgart (DE)
(72) Erfinder: Mauz, Uwe, Dipl.-Ing., W-7300 Esslingen (DE)

(56) Entgegenhaltungen:
- EP-A- 0 174 007
- EP-A- 0 204 913
- DE-C- 3 843 820
- DE-U- 8 609 696
- FR-A- 1 241 657
- FR-A- 1 374 458
- FR-A- 2 277 690
- FR-A- 2 364 777
- FR-A- 2 444 578
- GB-A- 1 005 633
- US-A- 5 005 855

## Beschreibung

Die Erfindung betrifft eine unabhängige Radaufhängung von Kraftfahrzeugen, mit den im Oberbegriff des Patentanspruches 1 aufgeführten Merkmalen.

Bei Radaufhängungen dieser Art (vgl. J. Reimpell, Fahrwerktechnik 1; 4. Auflage, Vogel-Verlag, Würzburg, S. 380) entstehen aus der Radaufstandskraft und dem seitlichen Abstand des am Radträger vorgesehenen Traggelenkes des einen Querlenker bildenden, unteren Radführungsgliedes zur Radlängsmittenebene Kippmomente, die durch den aufrecht angeordneten, mit seiner Kolbenstange in dem oberen, aufbaufesten Führungsgelenk elastisch abgestützten Stoßdämpfer des oberen Radführungsgliedes abzustützen sind.

Dabei wird der Stoßdämpfer in Fahrzeugquerrichtung auf Biegung beansprucht und dabei der Fahrzeuginnenseite zu verformt. Es sind deshalb insbesondere zwischen Kolbenstange und oberer Kolbenstangenführung des Dämpferzylinders große Reibungskräfte wirksam, die durch hohe Losbrechkräfte bedingte Schwergängigkeit des Stoßdämpfers und belastungsbedingten, hohen Verschleiß der oberen Kolbenstangenführung bewirken.

Der Erfindung liegt die Aufgabe zugrunde, bei einer Radaufhängung gemäß dem Oberbegriff des Patentanspruches 1 die durch Kippmomente des Radträgers beeinträchtigte Verschiebbarkeit der Kolbenstange im Stoßdämpferzylinder wesentlich zu verbessern.

Diese Aufgabe wird erfindungsgemäß durch die kennzeichnenden Merkmale des Patentanspruches 1 gelöst.

Bei der erfindungsgemäßen Konstruktion versucht das durch das vorgespannte, obere Stoßdämpfer-Führungsgelenk erzeugte Drehmoment den Stoßdämpferzylinder im wesentlichen über den von der Kolbenstange getragenen Kolben in Fahrzeugquerrichtung in Richtung auf die Fahrzeugaußenseite zu verschwenken. Somit wird gegenüber dem über den Radträger am Stoßdämpfer wirksamen Biegemoment ein dessen Verformung relativierendes Gegenmoment wirksam. Dies führt zu einer Radialentlastung der oberen Kolbenstangenführung im Stoßdämpferzylinder, so daß sich das obere Radführungsglied, insbesondere in der Konstruktionslage der Radaufhängung, durch entsprechende Leichtgängigkeit und insgesamt höhere Standzeit auszeichnet.

Das Vorspannen des oberen Führungsgelenkes ist vorteilhaft nach Patentanspruch 2 zu bewerkstelligen, wobei die durch den Gummikörper gebildete Feder eine zuverlässige Radführung gewährleistet.

Gemäß Patentanspruch 3 kann der Gummikörper zwischen einen inneren und einen äußeren Lagerteil einvulkanisiert sein, wobei für gewünschte Lagerelastizitäten eine Ausbildung des Gummikörpers nach Patentanspruch 4 günstig ist, da in diesem Fall durch Scherkräfte bedingte Überbeanspruchungen des Gummis vermieden werden können.

Eine für die Herstellung und Montage des Gummikörpers vorteilhafte Ausführungsform ist Gegenstand des Patentanspruches 5.

Für ein oberes Führungsgelenk mit mehr als nur einem Gummikörper ergibt sich eine günstige Konstruktion, wenn zwei, in Achsrichtung der Kolbenstange gegenseitig verspannbare, in Seitenansicht Keilform aufweisende und vorzugsweise ringförmige Gummikörper sich jeweils an einander gegenüberliegenden Seiten eines Kolbenstangenflansches, koaxial zur Kolbenstange, abstützen und einander derart zugeordnet sind, daß der die größte axiale Dicke aufweisende Umfangsabschnitt des einen Gummikörpers dem die kleinste axiale Dicke aufweisenden Umfangsabschnitt des anderen Gummikörpers gegenüberliegt.

Zwecks einer gewünschten Abstimmung ihrer Elastizitäten können hierbei die Gummikörper, insbesondere an ihrer dem Kolbenstangenflansch zugekehrten Stirnseite, gegebenenfalls noch mit einer umlaufenden, nutartigen Vertiefung ausgestattet sein, deren Tiefe sich über den Umfang verändert.

Bei einer Ausführungsform des oberen Führungsgelenkes gemäß Patentanspruch 6 bildet dasselbe ein Kugelgelenk, das eine exakte Radführung gewährleistet, indem der Gummikörper zur Abstützung von Quer- und Längskräften in radialer Richtung entsprechend hart, jedoch zugleich sehr drehweich ausgelegt werden kann, um, insbesondere im Falle eines gelenkten Rades, entsprechende Taumelbewegungen des inneren Lagerteils zu ermöglichen.

Kommt ein derartiges Führungsgelenk in einer Radaufhängung für schwere Nutzfahrzeuge, wie beispielsweise Omnibusse, zum Einsatz, ist es gleichfalls günstig, den Gummikörper als Gummi-Metallelement auszubilden, wodurch neben einer scherkraftbedingten Überbeanspruchung des Gummis zugleich die erforderliche hohe, radiale Lagersteifigkeit zur Abstützung entsprechend hoher Quer- und Längskräfte sichergestellt werden kann.

Eine Ausgestaltung des Gummikörpers nach Patenanspruch 7 ermöglicht es, die Einbauhöhe des Führungsgelenkes möglichst klein zu halten und dessen Verdrehweichheit zu optimieren.

Eine Ausgestaltung des Kugelgelenkes nach Patentanspruch 8 bietet den Vorteil, in der Konstruktionslage den Abstand seines Gelenkmittelpunktes zur oberen Kolbenstangenführung des Stoßdämpfer-Zylinderrohres entsprechend klein halten zu können. Hierdurch ist an der Kolbenstange, aufgrund der gegebenen Lagervorspannung, ein entsprechend minimales Biegemoment wirksam, das es wiederum erlaubt, den Stangendurchmesser entsprechend klein zu wählen.

Eine Ausgestaltung des Kugelgelenkes nach Patentanspruch 9 ermöglicht eine leichte Montierbarkeit des oberen Führungslagers am Stoßdämpfer und die vorteilhafte Abstützung von Zug- und Druckkräften am inneren Lagerteil sowie des Drehmoments über den inneren Lagerteil an der Kolbenstange.

Eine Ausgestaltung der Erfindung nach Patentanspruch 10 bietet die Möglichkeit einer weiteren Verringerung von aus Biegemomenten resultierenden Verformungen des Stoßdämpfer-Zylinderrohres.

Die Erfindung ist gleich vorteilhaft geeignet für Radaufhängungen von gelenkten oder nicht gelenkten Fahrzeugachsen, wobei diese angetrieben oder antriebslos sein können.
- Figur 1: eine Vorderansicht einer mit unabhängigen Radaufhängungen ausgestatteten, gelenkten Achse für einen Niederflurbus,
- Figur 2: einen Schnitt durch die Lenkachse entlang der Linie II-II der Figur 1,
- Figur 3: eine Draufsicht auf die Darstellung gemäß Figur 2,
- Figur 4: einen Schnitt entlang der Linie IV-IV der Figur 2 durch das Führungsgelenk des Dämpferbeins der Lenkachse, wobei das Führungsgelenk in entspanntem Zustand gezeigt ist,
- Figur 5: eine Ansicht auf den unteren Teil des Radträgers, in Richtung des Pfeiles C der Figur 1 gesehen,
- Figur 6: einen Schnitt entlang der Linie VI-VI der Figur 5,
- Figur 7: einen Schnitt entlang der Linie VII-VII der Figur 5.
- Figur 8: einen entlang der Linie IV-IV der Figur 2 geführten Schnitt durch eine Konstruktionsvariante eines Führungsgelenkes.

Die gezeigte Lenkachse weist zwei einander entsprechende Einzelradaufhängungen auf, von denen lediglich eine gezeigt ist. Diese umfaßt einen Radträger 10, auf dessen Lagerzapfen 12 ein Rad 14 drehbar gelagert ist. Der Radträger 10 ist mittels eines unteren Schräglenkers 16, eines beispielsweise als Dämpferbein 18 ausgebildeten oberen Radführungsgliedes und einer Lenkeinrichtung 19 geführt.

Der Schräglenker 16 ist aus einem sich vorzugsweise über die Fahrzeuglängsmittenebene a-a hinaus erstreckenden, einen Querlenker bildenden Lenkerarm 20 und einem mit diesem starr verbundenen, einen Längslenker bildenden Lenkerarm 22 gebildet, der, in Draufsicht betrachtet und, bezogen auf die Fahrtrichtung F, hinter der Raddrehachse 24 liegt und sich schräg nach vorne und außen und in der Konstruktionslage im wesentlichen horizontal erstreckt.

Der Lenkerarm 20 befindet sich für diese Radaufhängung, bezogen auf die Fahrtrichtung F, ausgehend von seiner Verbindungsstelle mit dem Lenkerarm 22, vor der Raddrehachse 24. Dementsprechend ist der entsprechende Lenkerarm für die gegenüberliegende Radaufhängung hinter der Radachse 24 vorgesehen.

Die aufbaufesten Lager 23 und 25 beider Lenkerarme 20 und 22 definieren aufgrund einer entsprechend gewählten Lenkerlänge und einer entsprechenden Lenkereinpassung eine Schräglenker-Schwenkachse 26, die, in Draufsicht betrachtet, und mit bezug auf die Fahrtrichtung F, hinter der Raddrehachse 24 liegt und sich schräg von innen nach außen hinten erstreckt. Sie nimmt dabei eine Schräglage zwischen 35° und 60°, vorzugsweise 50°, zur Fahrzeuglängsmittenebene a-a ein.

Für den Schräglenker 16 ist damit aufbauseitig eine entsprechend breite Abstützbasis geschaffen, wobei aus der Längenauslegung der beiden Lenkerarme 20 und 22 und der Einpassung des Schräglenkers 16 in die Lenkachse eine Achskinematik resultiert, durch die sich u. a. bei Ein- und Ausfederungen Sturzänderungen auf einem Kleinstwert halten lassen.

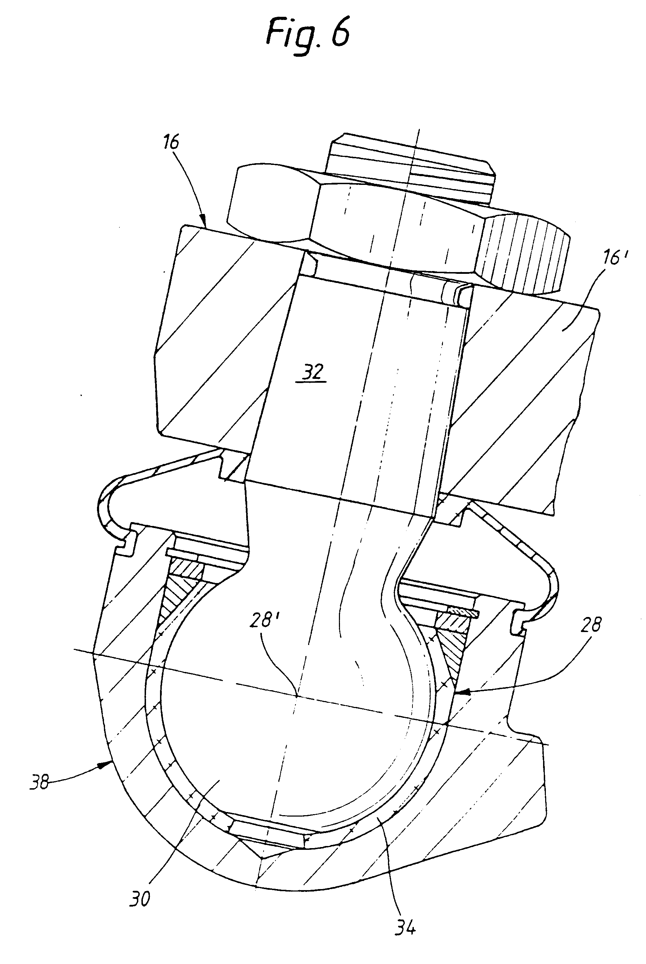

Die Anlenkung des Schräglenkers 16 am Radträger 10 ist mittels eines hängenden Traggelenkes 28 (siehe Figur 6) bewerkstelligt, das ein Kugelgelenk bildet. Dessen Gelenkkugel 30 sitzt an einem vorzugsweise konischen Zapfen 32, der seinerseits im radträgerseitigen Endstück 16' des Schräglenkers 16 derart gehalten ist, daß sich die Gelenkkugel 30 an der Lenkerunterseite befindet.

Eine die Gelenkkugel 30 aufnehmende Lagerpfanne 34 ist in einem Endstück eines an der Unterseite des Radträgers 10 innerhalb der Radfelge 36 befestigten Traggliedes 38, vorzugsweise durch Einformen, vorgesehen. Die Kugelpfanne 34 befindet sich hierbei zwischen zwei in gleicher Ebene vorgesehenen, oberen Lenkhebel-Spannflächen 40 und 42, zu denen, bei montiertem Traggelenk 28, dessen Zapfen 32 in spitzem Winkel nach oben und in Fahrzeugquerrichtung nach innen gerichtet ist.

Die Spannflächen 40 und 42 bilden jeweils eine obere Stirnfläche eines an das Tragglied 38 angeformten Befestigungsauges 44 bzw. 46, das jeweils von einer Bohrung 48 bzw. 50 durchsetzt ist.

Fluchtend zu diesen Bohrungen 48 bzw. 50 sind auch untere Befestigungsaugen 52 und 54 des Radträgers 10 von jeweils einer Bohrung 56 bzw. 58 durchdrungen. Diese Befestigungsaugen 52 und 54 begrenzen eine sich in Fahrzeugquerrichtung nach innen öffnende Vertiefung 59 des Radträgers 10, welche das auf dem Zapfen 32 des Traggelenkes 28 sitzende Endstück 16' des Schräglenkers 16 z. T. aufnimmt.

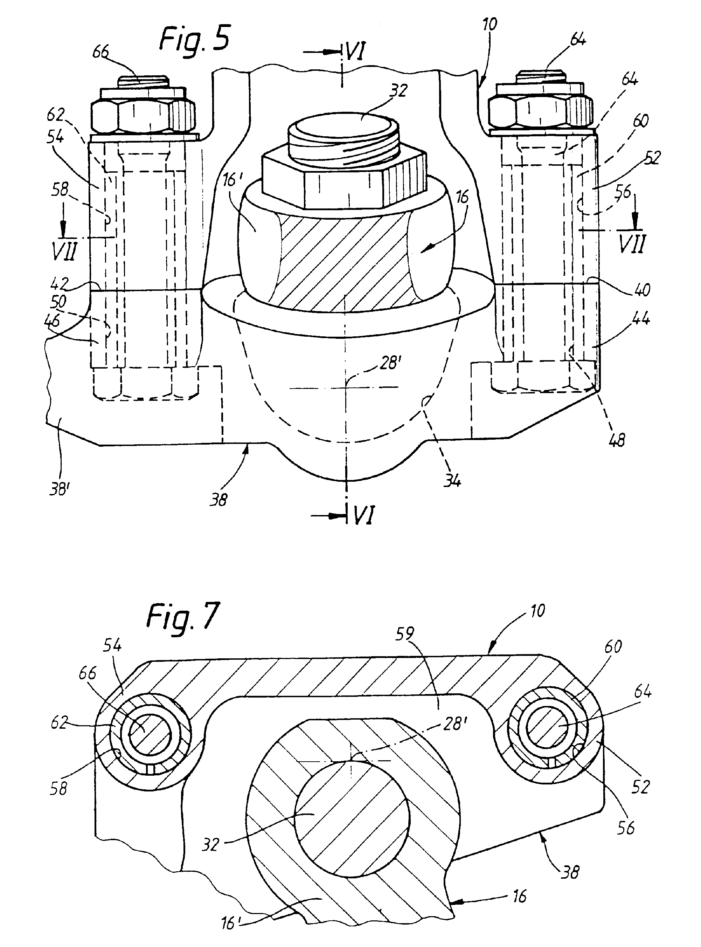

Mittels jeweils einer in die Bohrungen 48, 50, 56, 58 eingebrachten Scherbuchse 60 bzw. 62 und den Schrauben 64 und 66 (siehe Figur 5) ist das Tragglied 38 am Radträger 10 lösesicher festgelegt.

Vom Tragglied 38 erstreckt sich in Fahrtrichtung F ein in Fahrzeugquerrichtung nach innen abragender Anschlußteil 38' weg. Beide Teile 38 und 38' bilden zusammen einen Lenkhebel.

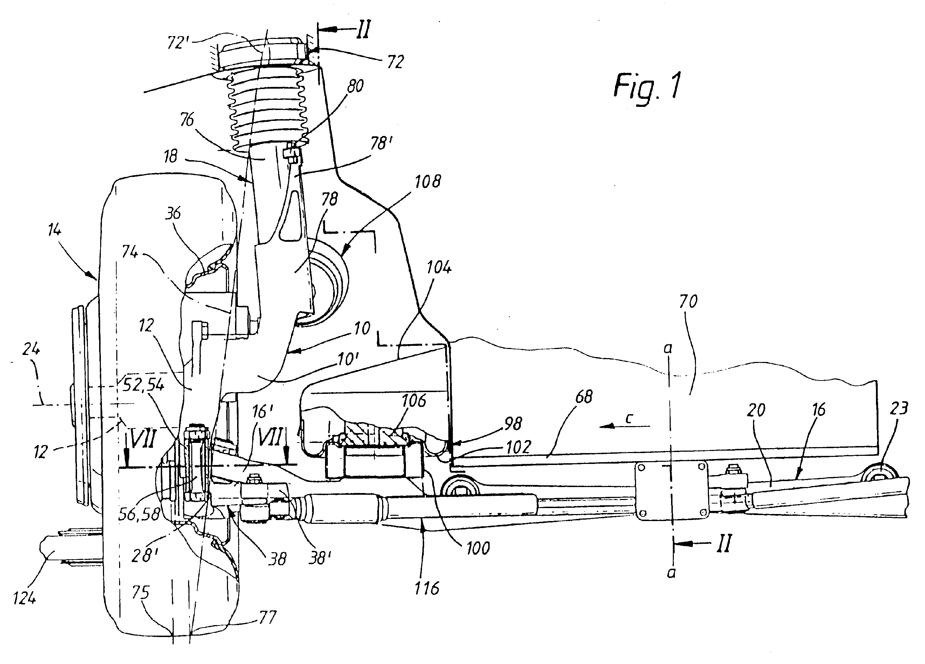

Wie Figur 1 zeigt, befindet sich das Traggelenk 28 bzw. dessen Gelenkpunkt 28' ungefähr in der Horizontalebene, in der sich der die größere Länge aufweisende und in Fahrzeugquerrichtung gerichtete Lenkerarm 20 des Schräglenkers 16 erstreckt. Dies ist durch entsprechendes Abkröpfen des Schräglenkerendstückes 16' schräg nach oben erreicht. Dadurch ist es möglich, die Höhe eines Fußbodens 68, beispielsweise eines in der Fahrzeuglängsmittenebene a-a verlaufenden Durchganges 70 eines Omnibusaufbaus, über den Achsen sehr tief legen zu können.

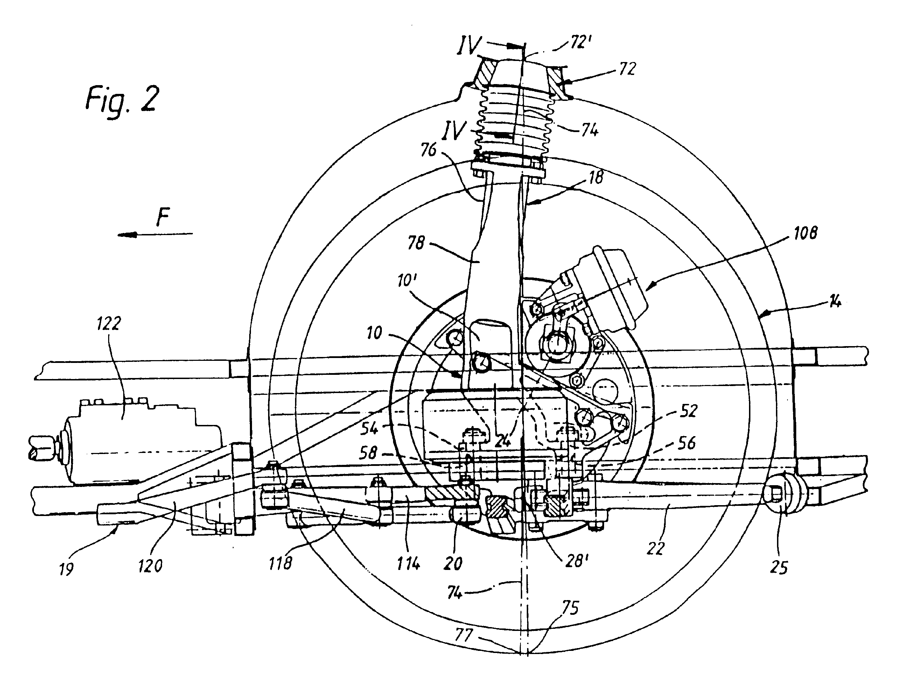

Wie die Figuren 1 und 2 zeigen, ist das Dämpferbein 18 vorzugsweise so in die Einzelradaufhängung eingepaßt, daß es sich von dessen oberem, aufbaufesten, elastischen Führungsgelenk 72 in Fahrzeugquerrichtung schräg nach innen unten, und bezogen auf die Fahrtrichtung F, nach vorne unten erstreckt.

Der Gelenkpunkt 28' des Traggelenkes 28 und der Gelenkpunkt 72' des Führungsgelenkes 72 des Dämpferbeines 18 definieren eine Lenkachse 74, aus deren Verlauf sich einerseits, aufgrund entsprechender Spreizung, ein positiver Lenkrollhalbmesser und andererseits ein, in Fahrtrichtung F gesehen, vor dem Radaufstandspunkt 75 liegender Spurpunkt 77 und damit ein positiver Radnachlauf ergibt.

Das untere Endstück des Zylinderrohres 76 des Dämpferbeines 18 endet in entsprechend großem Abstand oberhalb des Schräglenker-Endstückes 16' (siehe Figur 1) und ist hierzu in einem nach oben gerichteten Hals 78 gehalten, der von einem sich oberhalb des Lenkerendstückes 16' in Fahrzeugquerrichtung erstreckenden Radträgeransatz 10' gehalten ist.

Die Schräglenkeranordnung stellt auch bei Federbewegungen des Rades 14 eine weitgehende Konstanz der Spreizung sicher.

Die Biegebeanspruchung des Dämpferbein-Zylinderrohres 76 durch aus Quer- und Längskräften erwachsenden Biegemomenten ist dadurch entsprechend vermindert, daß ein Abstützelement in Form einer Halsverlängerung 78' vorgesehen ist, die das Zylinderrohr 76 über einen Teil seiner Länge teilweise umgreift.

Um für das Rad 14 bei Einfederung genügenden Freigang zu schaffen, stützt sich die Halsverlängerung 78' vorzugsweise an dem der Fahrzeuglängsmittenebene a-a zugekehrten Rohrumfangsteil ab. Dabei ist an dieser Abstützseite zur Erzeugung der erforderlichen Reaktionskraft eine Verschraubung 80 der Halsverlängerung 78' an deren freiem Ende mit dem Rohrmantel vorgesehen.

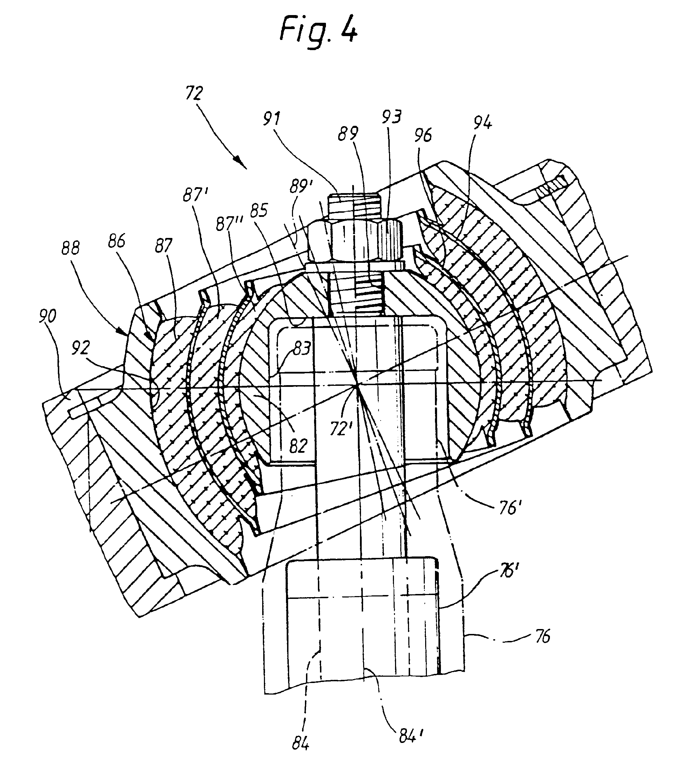

Das obere Führungsgelenk 72 ist derart gestaltet, daß es zu einer stark verringerten Reibung in der Kolbenstangenführung des Dämpferbeines 18 beträgt. Wie Figur 4 zeigt, ist hierzu dasselbe als in Fahrzeugquerrichtung vorspannbares Kugelgelenk ausgebildet, das in entspanntem Zustand gezeigt ist.

Mit 82 ist ein innerer Lagerteil in Form einer auf dem oberen Ende einer Kolbenstange 84 befestigten Gelenkkugel bezeichnet, die in einen Gummikörper 86, vorzugsweise in Form eines Gummi-Metallelementes, einvulkanisiert ist, das seinerseits in einen äußeren , ein Lagergehäuse 88 bildenden Lagerteil einvulkanisiert ist. Das Lagergehäuse 88 seinerseits ist in einen Träger 90 eingesetzt, der an einer Aufnahmebasis des Fahrzeugaufbaus befestigbar ist, was im einzelnen der Einfachheit halber in den Figuren 1 und 4 nicht dargestellt ist.

Wie aus Figur 4 zu ersehen ist, weist die Gelenkkugel 82 eine Sacklochbohrung 83 auf, die am Boden 85 von einer zentralen Bohrung 89 durchsetzt ist. Diese ist von einem an freien Stirnende der Kolbenstange 84 angeformten Gewindeschaft 91 durchdrungen.

Das Stirnende der Kolbenstange 84 stützt sich am Boden 85 der Sacklochbohrung 83 ab und ist mit diesem durch eine auf den Gewindeschaft 91 aufgeschraubte Gewindemutter 93 verspannt.

Der Durchmesser der Sacklochbohrung 83 ist etwas größer gewählt als der Außendurchmesser des oberen Endstückes 76' des Zylinderrohres 76.

Der Eingriff der Kolbenstange 84 in die Sacklochbohrung 83 bietet den Vorteil eines relativ kleinen Abstandes des Gelenkpunktes 72' vom oberen Endstück 76' des Zylinderrohres 76 in allen Federungszuständen der Radaufhängung.

Bei maximaler Einfederung vermag dieses Endstück 76' in die Gelenkkugel 82 einzutauchen, was hinsichtlich der Bauhöhe der Radaufhängung Vorteile bietet. Die Anordnung der Gelenkkugel 82 auf der Kolbenstange 84 ist leicht zu bewerkstelligen, wobei die gegenseitige Verspannung dieser Teile 82 und 84 eine sichere Dämpferkraftübertragung in das Kugelgelenk 72 sowie eine ebensolche Abstützung von Zug- und Druckkräften und des Drehmoments gewährleistet.

Das Lagergehäuse 88 ist in Art einer an einander gegenüberliegenden Seiten abgeschnittenen, also beidseitig offenen Hohlkugel ausgebildet, deren Zentrum mit demjenigen der Gelenkkugel 82 zusammenfällt und an deren Innenumfangsfläche 92 das Gummi-Metallelement 86 anvulkanisiert ist.

Das Gummi-Metallelement 86 besteht aus mehreren, beispielsweise drei teilkugelförmigen Gummikörperteilstücken 87, 87' 87'', zwischen die zur Erzielung einer bestimmten Federcharakteristik zur Erzeugung der erforderlichen Lagervorspannkräfte Zwischenbleche 94 und 96 einvulkanisiert sind, die, analog zu den Gummikörperteilstücken 87, 87', 87'', in Art von an einander gegenüberliegenden Umfangsbereichen abgeschnittenen Hohlkugeln ausgebildet sind.

In der in Figur 4 gezeigten Konstruktionslage des Führungsgelenkes 72 weicht die Lage der durch den Gelenkpunkt 72' hindurchgehenden Achse 84' der Kolbenstange 84 von der den Gelenkpunkt 72' durchdringenden Achse 89' des Lagergehäuses 88 ab.

Beim Einbau des Führungsgelenkes 72 werden Lagergehäuse 88 und Kolbenstange 84 in der Zeichenebene der Figur 4 relativ zueinander derart verschwenkt, daß beide Achsen 84' und 89' vorzugsweise im wesentlichen zusammenfallen. Dabei erhält das Gummi-Metallelement 86 eine solche Vorspannung, daß in der Einbaulage des Führungsgelenkes 72, bezogen auf die Konstruktionslage des Fahrzeugaufbaues, die Kolbenstange 84 in der oberen Kolbenstangenführung des Dämpferbein-Zylinderrohres 76 leicht losbrechen kann bzw. mit optimal minimierter Reibung geführt ist. Zu diesem Zweck versucht das vorgespannte Gummi-Metallelement 86 die Kolbenstange 84, gemäß Figur 1, im Uhrzeigersinn und damit das Dämpferbein-Zylinderrohr 76 in Fahrzeugquerrichtung nach außen zu verschwenken.

Die untere Abstützung des Dämpferbeines 18, weit oberhalb des abgekröpften Schräglenkerendstückes 16' bietet den Vorteil, eine Luftfeder 98 innerhalb der Einzelradaufhängung in radnahem Bereich vorsehen zu können. Deren Stützkolben 100 ist dabei auf dem Schräglenker 16 und deren Luftbalg 102 mit einer Deckelplatte an einer aufbaufesten Konsole 104 abgestützt.

Diese, den Durchgang 70 des Omnibusaufbaues entsprechend breit auszulegen gestattende Luftfederanordnung ermöglicht ein günstiges Übersetzungsverhältnis für die Luftfeder 98 und eine Dimensionierung ihres Luftbalges 102, die es ermöglicht, auf eine Zusatzfeder in Form einer Schaubenfeder aus Stahl oder z. B. eine glasfaserverstärkte Kunststoffeder als Querblattfeder verzichten zu können.

106 bezeichnet einen in den Luftbalg 102 integrierten Puffer für einen progressiven Kennlinienverlauf nach einem vorbestimmten Einfederweg.

Mit 108 ist als Ganzes eine an sich bekannte, druckluftgesteuerte Betätigungsvorrichtung für eine nicht näher gezeigte Scheiben- oder Trommelbremse bezeichnet.

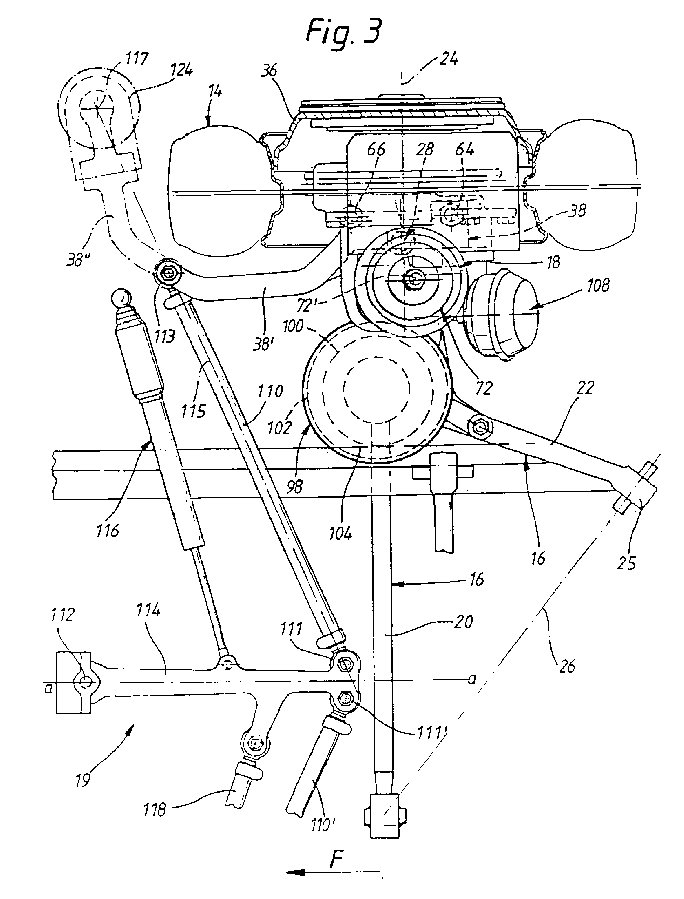

Wie Figur 3 zeigt, erstreckt sich der Lenkhebel 38, 38', bezogen auf die Fahrtrichtung F, vor der Raddrehachse 24 aus der Radfelge 36 heraus und im wesentlichen horizontal in Fahrtrichtung F. An dessen freiem Ende ist mit seinem einen Ende ein Spurstangenteilstück 110 einer beispielsweise zweigeteilten Spurstange angelenkt, deren anderes Ende an einem aufbauseitig in der Fahrzeuglängsmittenebene a-a um eine vertikale Achse 112 verschwenkbaren Lenkzwischenhebel 114 angelenkt ist, von dem sich auch ein weiteres Spurstangenteilstück 110' in Richtung auf die andere Einzelradaufhängung weg erstreckt.

Das innere Gelenk 111 bzw. 111' beider Spurstangenteilstücke 110, 110' am Lenkzwischenhebel 114 befindet sich in wesentlich kleinerem Abstand zu der die Raddrehachse 24 enthaltenden Fahrzeugquerebene als deren lenkhebelseitiges Gelenk 113.

116 bezeichnet einen am Lenkzwischenhebel 114 angelenkten Lenkungsdämpfer, während 118 einen durch einen Lenkstockhebel 120 (Figur 2) eines Lenkgetriebes 122 verstellbaren Lenkstange bezeichnet.

Die Erstreckungsrichtung des Lenkhebels 38, 38' bietet den Vorteil, diesen, wie gezeigt, auch für ein spurführbares Lenken der Lenkachse des Niederflurbusses oder eines anderen Nutzfahrzeuges einsetzen zu können. Hierzu ist der Lenkhebel 38, 38' entsprechend zu verlängern.

Der Lenkhebel 38, 38' erstreckt sich dann mit einem Hebelteilstück 38'', das Rad 14 frontseitig übergreifend, nach außen und trägt eine Spurführungsrolle 124, die sich beim Fahren entlang einer Spurführungsstrecke an einem nicht dargestellten Querführungssteg abwälzt und dabei die radführenden Seitenführungskräfte auf den Lenkhebel 38, 38', 38'' überträgt.

In diesem Falle überbrücken die Spurstangenteilstücke 110, 110', in Verbindung mit dem Lenkzwischenhebel 114, die Distanz zwischen den Lenkhebeln 38, 38', 38'' beider Einzelradaufhängungen und bilden dabei Lenkhebel-Abstützstreben, die bei zuverlässiger Abstützung der Seitenführungkräfte, insbesondere bei Geradeausfahrstellung der Räder 14, eine entsprechend günstige Auslegung der Lenkhebelquerschnitte ermöglichen.

Die Anordnung der Gelenke 111 und 113 des Spurstangenteilstückes 110 und die entsprechenden Gelenke des anderen Spurstangenteilstückes 110', von denen lediglich das innere Gelenk 111' gezeigt ist, ist hierzu derart gewählt, daß die Längsachse 115 der Spurstangenteilstücke 110, 110' in Geradeausfahrstellung der Räder 14 auf die Drehachse 117 der am jeweiligen Lenkhebel 38, 38' gelagerten Spurführungsrolle 124 gerichtet ist. Dabei befindet sich das äußere Gelenk 113 am Lenkhebel 38, 38', 38'' in dessen radial äußerem, der Spurführungsrolle 124 benachbarten Bereich. Damit übernimmt bei dieser Radstellung die aus den Spurstangenteilstücken 110, 110' gebildete Spurstange die Abstützung der von den Spurführungsrollen 124 auf die Tragarme 35, 38', 38'' übertragenen Seitenführungskräfte.

Schließlich gewährleisten die Anordnung des Schräglenkers 16 und die fahrzeugmittig abgestützten Spurstangenteilstücke 110, 110' minimale Vorspuränderungen.

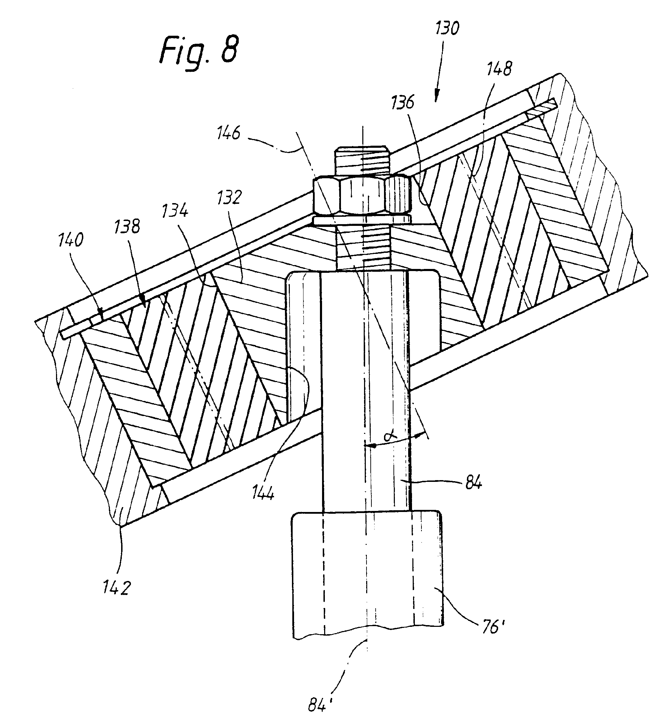

In Figur 8 ist ein weiteres Ausführungsbeispiel eines als Ganzes mit 130 bezeichneten Führungsgelenkes veranschaulicht.

Hier weist der innere, mit 132 bezeichnete Lagerteil eine zylindrische Außenumfangsfläche 134 auf und ist in eine zentrale Ausnehmung 136 eines vorzugsweise kreisringförmigen Gummikörpers 138 einvulkanisiert, der seinerseits in ein Lagergehäuse 140 einvulkanisiert ist. Letzteres sitzt in einem Lagerträger 142.

Mit 144 ist eine in den Lagerteil 132 auf seiner dem Stoßdämpfer 76, 84 zugekehrten Stirnseite eingebrachte Sacklochbohrung bezeichnet, deren Achse mit der Achse 84' der Kolbenstange 84 zusammenfällt.

Zur Erzielung der erforderlichen Vorspannung des Führungsgelenkes 130 liegt die Sacklochbohrung 144 unter einem Winkel α zur Lagerachse 146. Die Befestigung der Kolbenstange 84 ist analog zur Konstruktion gemäß Figur 4 getroffen.

Wie bei 148 strichpunktiert angedeutet ist, kann der Gummikörper 138 durch Einvulkanisieren wenigstens eines Blechmantels als Gummi-Metallelement ausgebildet sein.

## Patentansprüche

1. Unabhängige Radaufhängung von Kraftfahrzeugen, mit einem Radträger (10), der über ein unteres und ein oberes Radführungsglied (16,18) geführt ist, von denen das untere ein in seitlichem Abstand zur Radlängsmittenebene am Radträger angelenkter Lenker (16) ist und das obere einen aufrechten Stoßdämpfer (18) aufweist, dessen Kolbenstange (84) in einem oberen, aufbaufesten Führungsgelenk (72,130) mit einem Gelenkpunkt (72') elastisch gehalten ist,
**dadurch gekennzeichnet**,
daß das obere Führungsgelenk (72; 130) des Stoßdämpfers (18,76, 84) in Einbaulage zur Erzeugung eines einem über den Radträger (10) am Stoßdämpfer (18, 76, 84) angreifenden Biegemoment entgegenwirkenden Drehmoments in einer Fahrzeugquerebene um den Gelenkpunkt (72') vorgespannt ist.

2. Radaufhängung nach Anspruch 1,
**dadurch gekennzeichnet**,
daß das obere Führungsgelenk (72; 130) zur Erzeugung des Drehmoments mindestens einen vorspannbaren, zwischen zwei Lagerteilen (82, 88; 132, 140) eingebrachten Gummikörper (86; 138) aufweist.

3. Radaufhängung nach Anspruch 2,
**dadurch gekennzeichnet**,
daß der Gummikörper (86; 138) zwischen innere und äußere Lagerteile (82, 88; 132, 140) einvulkanisiert ist.

4. Radaufhängung nach Anspruch 3,
**dadurch gekennzeichnet**,
daß der Gummikörper (86; 138) ein Gummi-Metallelement ist.

5. Radaufhängung nach Anspuch 3 oder 4,
**dadurch gekennzeichnet**,
daß der Gummikörper eine Ringscheibe (138) ist.

6. Radaufhängung nach Anspruch 3 oder 4,
**dadurch gekennzeichnet**,
daß das obere Führungsgelenk ein Kugelgelenk (72) ist, zwischen dessen von der Kolbenstange (84) getragenem, inneren, kugelförmigen Lagerteil (82) und dessen äußerem, kugelschalenartig ausgebildeten Lagerteil (86) der teilkugelförmige Gummikörper (86) einvulkanisiert ist.

7. Radaufhängung nach Anspruch 6,
**dadurch gekennzeichnet**,
daß der Gummikörper (86) samt äußerem Lagerteil (88) kugelschichtförmig ausgebildet ist.

8. Radaufhängung nach Anspruch 6 oder 7,
**dadurch gekennzeichnet**,
daß der innere, kugelförmige Lagerteil (82) eine das Kolbenstangenendstück aufnehmende Ausnehmung (83) aufweist, in die bei Einfederungen das obere Ende des Stoßdämpfer-Zylinderrohres (76) eintaucht.

9. Radaufhängung nach Anspruch 8,
**dadurch gekennzeichnet**,
daß der innere, kugelförmige Lagerteil (82) von einem am Stirnende der Kolbenstange (84) vorgesehenen Gewindeschaft (91) durchsetzt ist, auf den eine den inneren Lagerteil (82) und die Kolbenstange (84) miteinander verspannende Gewindemutter (93) aufgeschraubt ist.

10. Radaufhängung nach einem der vorhergehenden Ansprüche,
**dadurch gekennzeichnet**,
daß der Stoßdämpfer (18) mit dem unteren Ende seines Zylinderrohres (76) am Radträger (10) drehfest gehalten und von einem sich von diesem nach oben erstreckenden Abstützelement (78') über einen Teil seiner Länge in Fahrzeugquerrichtung seitlich abgestützt ist.

## Claims

1. An independent wheel suspension for motor vehicles with a wheel carrier (10) guided by a lower and an upper wheel guiding member (16, 18), of which the lower is a control arm (16) articulated on the wheel carrier at a lateral distance from the longitudinal central plane through the wheel, while the upper comprises an upright shock absorber (18), of which the piston rod (84) is resiliently supported in an upper guide joint (72; 130) rigid with the superstructure and having a point of articulation (72'), characterised in that the upper guide joint (72; 130) of the shock absorber (18, 76, 84) in the installed position, is pretensioned about the point of articulation (72') in a transverse plane of the vehicle in order to generate a torque to counteract a bending moment engaging the shock absorber (18, 76, 84) via the wheel carrier (10).

2. A wheel suspension according to claim 1, characterised in that to generate the torque, the upper guide joint (72; 130) has at least one pretensionable rubber member (86; 136) which is incorporated between two bearing parts (82, 88; 132, 140).

3. A wheel suspension according to claim 1, characterised in that the rubber member (86; 138) is vulcanised into position between inner and outer bearing parts (82, 88; 132, 140).

4. A wheel suspension according to claim 3, characterised in that the rubber member (86; 138) is a rubberised metal element.

5. A wheel suspension according to claim 3 or 4, characterised in that the rubber member is an annular disc (138).

6. A wheel suspension according to claim 3 or 4, characterised in that the upper guide joint is a ball and socket joint (72) in which a partially spherical rubber member (86) is vulcanised into position between the inner spherical bearing part (82) carried by the piston rod (84) and the outer spherical socket-like bearing part (86).

7. A wheel suspension according to claim 6, characterised in that the rubber member (86) together with the outer bearing part (88) is constructed as a spherical coating.

8. A wheel suspension according to claim 6 or 7, characterised in that the inner spherical bearing part (82) has, accommodating the end of the piston rod, a recess (83) into which the top end of the cylindrical shock absorber tube (76) plunges during spring deflection.

9. A wheel suspension according to claim 8, characterised in that the inner spherical bearing part (82) is traversed by, provided at the end of the piston rod (84), a screw threaded stem (91) onto which is screwed a screw threaded nut (93) which clamps together the inner bearing part (82) and the piston rod (84).

10. A wheel suspension according to one of the preceding claims, characterised in that the bottom end of the cylindrical tube (76) of the shock absorber (18) is rotationally rigidly held on the wheel carrier (10) and is over a portion of its length braced laterally in the transverse direction of the vehicle by a bracing element (78') extending upwardly from the wheel carrier (10).

## Revendications

1. Suspension de roue indépendante pour véhicules automobiles, comportant un support de roue (10), qui est guidé par l'intermédiaire d'un organe inférieur de guidage et d'un organe supérieur de guidage (16, 18), parmi lesquels l'organe inférieur est un bras oscillant (16) articulé sur le support de roue en étant espacé latéralement du plan central longitudinal de la roue tandis que l'organe supérieur de guidage comporte un amortisseur vertical (18) dont la tige de piston (84) est maintenue élastiquement dans une articulation supérieure de guidage (72, 130), solidaire de la caisse et pourvue d'un point d'articulation (72'), caractérisée en ce que l'articulation supérieure de guidage (72 ; 130) de l'amortisseur (18, 76, 84) est soumise, dans la position d'installation et pour produire un couple s'opposant à un moment de flexion s'exerçant par l'intermédiaire du support de roue (10) sur l'amortisseur (18, 76, 84), à une précontrainte autour du point d'articulation (72') dans un plan transversal du véhicule.

2. Suspension de roue selon la revendication 1, caractérisée en ce que l'articulation supérieure de guidage (72 ; 130) comporte, pour produire le couple, au moins un corps en caoutchouc (86 ; 138), pouvant être précontraint et monté entre deux parties d'appui (82, 88 ; 132, 140).

3. Suspension de roue selon la revendication 2, caractérisée en ce que le corps en caoutchouc (86 ; 138) est interposé par vulcanisation entre la partie intérieure et la partie extérieure d'appui (82, 88 ; 132, 140).

4. Suspension de roue selon la revendication 3, caractérisée en ce que le corps en caoutchouc (86 ; 138) est un élément en caoutchouc-métal.

5. Suspension de roue selon une des revendications 3 ou 4, caractérisée en ce que le corps en caoutchouc est un disque annulaire (138).

6. Suspension de roue selon une des revendications 3 ou 4, caractérisée en ce que l'articulation supérieure de guidage est une articulation à rotule (72), comportant une partie d'appui intérieure (82) de forme sphérique, portée par la tige de piston (84), et une partie d'appui extérieure (88) en forme de coquille sphérique, le corps en caoutchouc (86) de forme partiellement sphérique étant interposé par vulcanisation entre les parties d'appui (82, 86) précitées.

7. Suspension de roue selon la revendication 6, caractérisée en ce que le corps en caoutchouc (86) est agencé, en association avec la partie extérieure d'appui (88), en forme de coussinet sphérique.

8. Suspension de roue selon une des revendications 6 ou 7, caractérisée en ce que la partie d'appui intérieure (82) de forme sphérique comporte un évidement (83) recevant la partie extrême de la tige de piston et dans lequel pénètre, lors de mouvements de compression de la suspension, l'extrémité supérieure du tube cylindrique (76) de l'amortisseur.

9. Suspension de roue selon la revendication 8, caractérisée en ce que la partie d'appui intérieure (82) de forme sphérique est traversée par une broche filetée (91) prévue à l'extrémité frontale de la tige de piston (84) et sur laquelle est vissé un écrou fileté (93) fixant ensemble la partie d'appui intérieure (82) et la tige de piston (84).

10. Suspension de roue selon une des revendications précédentes, caractérisée en ce que l'amortisseur 18 est maintenu de façon non tournante par l'extrémité inférieure de son tube cylindrique (76) sur le support de roue (10) et est soutenue latéralement sur une partie de sa longueur, dans la direction transversale du véhicule, par un élément de soutien (78), s'étendant vers le haut à partir du support de roue (10).
